# FASCICULE DE BREVET EUROPEEN

(11) **EP 3 545 177 B1**
(45) Date de publication et mention de la délivrance du brevet: **30.12.2020**
(21) Numéro de dépôt: 17811632.3
(22) Date de dépôt: 16.11.2017
(51) Int. Cl.: F01D 17/10, F01D 17/14, F02C 6/08, F04D 27/02

(54) **TURBOMACHINE À DOUBLE FLUX ÉQUIPÉE D'UN SYSTÈME DE DÉCHARGE**
BYPASS-TURBOMASCHINE MIT EINEM ENTLÜFTUNGSSYSTEM
BYPASS TURBOMACHINE FITTED WITH BLEED SYSTEM

(30) Priorité: 25.11.2016 FR 1661540
(43) Date de publication de la demande: 02.10.2019
(73) Titulaire: Safran Aircraft Engines, 75015 Paris (FR)
(72) Inventeur: LE MARECHAL, Eric Pierre Georges, 77550 Moissy-Cramayel (FR); AGNERAY, Xavier Jean Yves Alain, 77550 Moissy-Cramayel (FR); PAPIN, Thierry Georges Paul, 77550 Moissy-Cramayel (FR); VAN GANSEN, Mathieu Daniel Marie, 77550 Moissy-Cramayel (FR); ZACCARDI, Cédric, 77550 Moissy-Cramayel (FR)
(74) Mandataire: Gevers & Orès
(86) Numéro de dépôt international: PCT/FR2017/053132
(87) Numéro de publication internationale: WO 2018/096239

(56) Documents cités:
- DE-C- 879 280
- FR-A1- 2 349 740
- FR-A1- 2 976 022

## Description

### DOMAINE TECHNIQUE

La présente invention concerne une turbomachine à double flux équipée d'un système de décharge.

### ETAT DE L'ART

L'état de l'art comprend notamment les documents DE-C-879 280, FR-A1-2 349 740, EP-A1-0 374 004, FR-A1-2 976 022, FR-A1-2 982 904 et FR-A1-3 020 400.

Une turbomachine à double flux comprend une veine d'écoulement d'un flux primaire ou flux chaud et une veine d'écoulement d'un flux secondaire ou flux froid. Il est connu d'équiper une telle turbomachine d'un système de décharge ou système VBV (acronyme de *Variable Bleed Valve*) destiné à réguler le débit d'entrée d'air dans la veine primaire afin notamment de limiter les risques de pompage du compresseur de la turbomachine en permettant l'évacuation ou la décharge d'un flux d'air dans la veine secondaire. De plus, en cas de pénétration accidentelle dans la veine primaire, d'eau, notamment sous forme de pluie ou de grêle, ou encore de débris divers, qui sont susceptibles de nuire au fonctionnement de la turbomachine, ces systèmes permettent de récupérer cette eau ou ces débris qui sont centrifugés et acheminés jusqu'à la veine secondaire.

Il existe actuellement plusieurs types de système VBV qu'on peut regrouper dans des systèmes à portes, en particulier écopantes, c'est-a-dire qui constitue une écope à au moins un moment de son ouverture, et des systèmes à fente.

Les systèmes à portes sont lourds et nécessitent une commande synchronisée pour la mise en fonctionnement des portes. Ils nécessitent donc des moyens de commande qui peuvent être encombrants, avec une cinématique complexe. De plus, pour les systèmes à portes écopantes, l'étanchéité est difficile à assurer.

Les systèmes à fente ne permettent en général pas l'éjection de débris mais permettent la décharge en pression de la veine primaire avec un système plus simple, moins encombrant et plus robuste en pilotage.

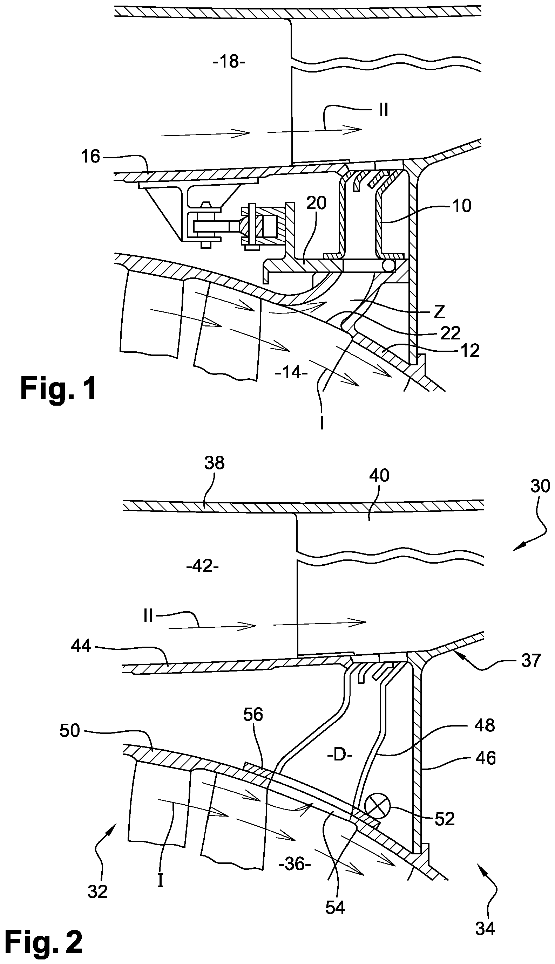

La figure 1 montre un système de décharge à fente. Le système de décharge comprend au moins un conduit de décharge 10 dont une extrémité interne débouche sur un carter externe 12 de la veine 14 d'écoulement du flux primaire I, en formant une « fente » 22, et dont une extrémité externe débouche sur un carter interne 16 de la veine 18 d'écoulement du flux secondaire II. Le système comprend en outre au moins un actionneur de déplacement d'au moins un élément 20 mobile entre une première position de fermeture du conduit et une position d'ouverture du conduit qui est une position de décharge. L'élément mobile 20 est ici un anneau guillotine déplaçable en direction axiale entre les deux positions précitées. Cependant, dans le cas général et comme illustré ici, le système à fente proposé implique l'existence d'une zone Z dite morte au niveau de la fente 22. Cette zone Z perturbe lourdement l'écoulement du flux primaire et provoque des pertes de charges gênantes.

La présente invention propose une solution simple, efficace et économique à ce problème.

### EXPOSE DE L'INVENTION

L'invention propose une turbomachine à double flux, comprenant une première veine annulaire d'écoulement d'un flux primaire et une deuxième veine annulaire coaxiale d'écoulement d'un flux secondaire s'étendant autour de cette première veine, la turbomachine comprenant en outre un système de décharge de gaz du flux primaire vers le flux secondaire, ledit système comprenant au moins un conduit de décharge dont une extrémité interne débouche sur un carter externe de la première veine et dont une extrémité externe débouche sur un carter interne de la seconde veine, ledit système comprenant en outre au moins un actionneur de déplacement d'au moins un élément mobile entre une première position de fermeture du conduit et une seconde position de décharge et d'ouverture du conduit,
caractérisée en ce que le système comprend deux anneaux coaxiaux s'étendant l'un autour de l'autre, un premier anneau interne perforé situé au niveau dudit carter externe et s'étendant sensiblement dans le prolongement de ce carter externe, et un second anneau externe perforé monté en coulissement circonférentiel sur le premier anneau, entre ladite première position dans laquelle les perforations des anneaux ne communiquent pas entre elles, et ladite seconde position dans laquelle les perforations des anneaux communiquent entre elles, ledit actionneur étant situé entre lesdits carters interne et externe en dehors de la veine de décharge définie par ledit conduit.

L'invention permet ainsi de résoudre le problème de la technique antérieure lié aux pertes de charges d'un système de décharge du type à « fente ». Les anneaux sont ici situés au niveau de cette fente et l'anneau interne, qui s'étend dans le prolongement du carter, permet de « obturer » la fente et d'éviter les pertes de charge dans cette zone. L'anneau interne reproduit ainsi une partie du carter, ou fait partie intégrante de celui-ci, ce qui est avantageux d'un point de vue aérodynamique. De plus, l'actionneur de commande de l'anneau externe est situé en dehors du flux d'air de décharge et des flux primaire et secondaire et n'est donc pas susceptible de générer des pertes de charge dans ces flux.

La turbomachine selon l'invention peut comprendre une ou plusieurs des caractéristiques suivantes:
- l'anneau interne est fixe par rapport audit carter externe ; en variante, on peut aussi imaginer que c'est l'anneau interne qui est mobile ;
- les anneaux interne et externe ont une même dimension axiale ;
- les perforations desdits anneaux interne et externe ont des formes et dimensions sensiblement identiques ;
- les anneaux interne et externe comportent chacun une ou deux rangées annulaires de fentes par exemple régulièrement réparties en direction circonférentielle ;
- les anneaux interne et externe comportent chacun une seule rangée annulaire de fentes, les fentes des anneaux étant situées dans un même plan sensiblement perpendiculaire à l'axe de révolution des anneaux ;
- les anneaux interne et externe comportent chacun au moins deux rangées annulaires de fentes, les fentes d'une des rangées de chaque anneau étant disposées en quinconce par rapport aux fentes de l'autre des rangées de cet anneau ;
- l'étendue circonférentielle cumulée des fentes de la rangée ou de chacune des rangées de chaque anneau est comprise entre 160 et 180° ;
- les fentes ont chacune une forme générale allongée s'étendant sensiblement en direction circonférentielle ; et
- les anneaux interne et externe comportent chacun un nombre de fentes inférieur à 50, et par exemple compris entre 5 et 20.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi vue schématique partielle en coupe axiale d'une turbomachine à double flux équipée d'un système de décharge selon l'art antérieur,
- la figure 2 est une demi vue schématique partielle en coupe axiale d'une turbomachine à double flux équipée d'un système de décharge selon l'invention,
- les figures 3 et 4 sont des vues schématiques en perspective d'anneaux du système de décharge de la figure 2, respectivement dans des positions de fermeture et d'ouverture d'un conduit de décharge, et
- la figure 5 est une vue très schématique partielle d'un anneau d'une variante de réalisation d'un système de décharge pour une turbomachine selon l'invention permettant de couvrir l'intégralité de la circonférence en conduits de décharge.

### DESCRIPTION DETAILLEE

La figure 1 a été décrite dans ce qui précède et illustre l'art antérieur.

La figure 2 est une vue schématique partielle en coupe axiale d'une turbomachine 30 à double flux. Une telle turbomachine comporte en général, de l'amont vers l'aval selon la direction d'écoulement des gaz, un compresseur basse pression 32, un compresseur haute pression 34, une chambre de combustion (non visible), une turbine haute pression (non visible) et une turbine basse pression (non visible), qui définissent une veine 36 d'écoulement d'un flux primaire de gaz I.

Le rotor de la turbine haute pression est solidaire du rotor du compresseur haute pression 34 de manière à former un corps haute pression, tandis que le rotor de la turbine basse pression est solidaire du rotor du compresseur basse pression 32 de manière à former un corps basse pression, de sorte que chaque turbine entraîne le compresseur associé en rotation autour d'un axe longitudinal de la turbomachine sous l'effet de la poussée des gaz provenant de la chambre de combustion.

Un carter intermédiaire 37 est habituellement interposé entre les compresseurs basse pression 32 et haute pression 34.

Dans le cas des turboréacteurs à double flux, qui comprennent une soufflante carénée par une nacelle 38 pour générer un flux secondaire II, le carter intermédiaire 37 comporte en général des bras 40 traversant la veine 42 d'écoulement de ce flux secondaire II.

Les bras 40 s'étendent entre la nacelle 38 et un carter annulaire interne 44 délimitant la veine 42 par sa face radialement externe (vis-à-vis de l'axe longitudinal de la turbomachine). Ce carter 44 fait ici partie du carter intermédiaire 37.

La turbomachine 30 comprend un système 46 de décharge de gaz du flux primaire I vers le flux secondaire II. Le système 46 comprend au moins un conduit de décharge 48 dont une extrémité radialement interne débouche sur un carter externe 50 délimitant la veine 36 du flux primaire I par sa face radialement interne, et dont une extrémité radialement externe débouche sur le carter 44.

Le système 46 comprend en outre au moins un actionneur 52 de déplacement d'au moins un élément mobile entre une première position de fermeture du conduit 48 et une seconde position de décharge et d'ouverture du conduit.

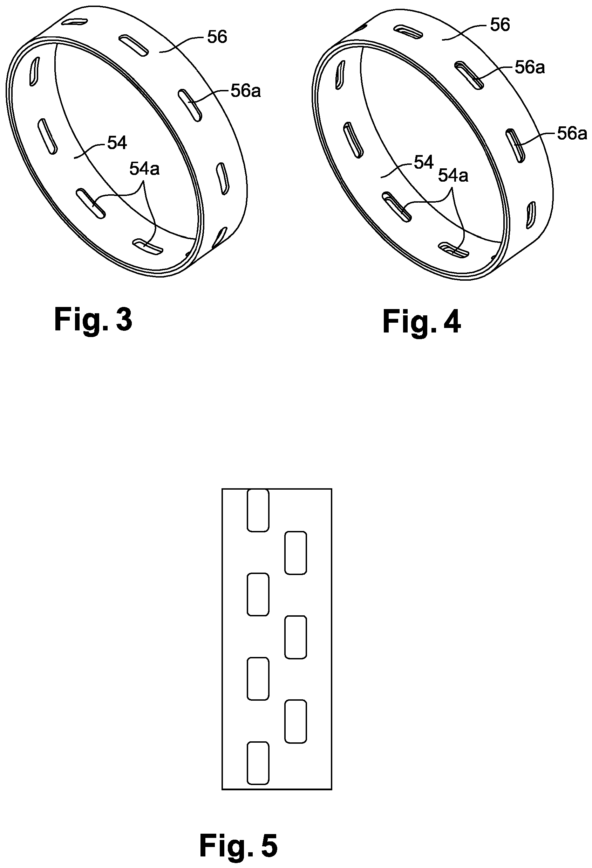

Dans le mode de réalisation représenté aux figures 1 à 3, le système 46 comprend deux anneaux 54, 56 coaxiaux s'étendant l'un autour de l'autre. Un premier anneau interne 54 perforé est situé au niveau du carter externe 50 et s'étend sensiblement dans le prolongement axial de ce carter externe. L'anneau interne est de préférence fixe par rapport au carter externe 50. Un second anneau externe 56 perforé est monté en coulissement circonférentiel sur le premier anneau 54, entre une position, correspondant à la première position de fermeture précitée, dans laquelle les perforations 54a, 56a des anneaux ne communiquent pas entre elles (figure 3), et une position, correspondant à la seconde position précitée, dans laquelle les perforations 54a, 56a des anneaux communiquent entre elles (figure 4).

Le système 46 comprend en outre un actionneur 52, tel qu'un vérin, qui est situé entre les carters 44, 50 en dehors de la veine de décharge D définie par le conduit 48.

Dans l'exemple de réalisation représenté aux figures 1 à 3, les anneaux 54, 56 ont une même dimension axiale. L'anneau externe 56 recouvre entièrement l'anneau interne 54.

Les perforations 54a, 56a des anneaux 54, 56 ont des formes et dimensions sensiblement identiques. Elles sont ici sous la forme de fentes. Chaque anneau comporte ici une seule rangée annulaire de fentes régulièrement réparties en direction circonférentielle. Chaque fente a une forme générale allongée s'étendant sensiblement en direction circonférentielle. Chaque fente a une étendue angulaire comprise entre 5 et 20°, et par exemple entre 10 et 18°. Chaque anneaua un nombre de fentes inférieur à 50, et par exemple compris entre 5 et 20. L'étendue circonférentielle cumulée des fentes de chaque anneau est comprise entre 160 et 180°.

Les fentes des anneaux s'étendent sensiblement dans un même plan sensiblement perpendiculaire à l'axe de révolution des anneaux, qui est l'axe longitudinal de la turbomachine 30. Deux fentes adjacentes de chaque anneau sont séparées l'une de l'autre par une partie pleine.

Dans la position de la figure 3, les fentes de chaque anneau sont alignées en direction radiale avec des parties pleines de l'autre anneau. La veine d'écoulement du flux primaire I n'est donc pas en communication fluidique avec la veine du conduit de décharge.

Dans la position de la figure 4, les fentes des anneaux sont alignées en direction radiale. La veine d'écoulement du flux primaire I est en communication fluidique avec la veine du conduit de décharge par les fentes, et un flux de décharge peut passer à travers le conduit 48 jusque dans la veine du flux secondaire.

Le déplacement de l'anneau externe 56, depuis la position de la figure 3 à la position de la figure 4, est assuré par l'actionneur 52. Dans l'exemple représenté, ce déplacement est réalisé sur un angle de l'ordre de 15-20°.

La figure 5 illustre une variante de réalisation dans laquelle les deux anneaux (bien qu'un seul soir représenté) comportent chacun deux rangées annulaires de fentes. Les fentes d'une première rangée de chaque anneau sont disposées en quinconce par rapport aux fentes de l'autre rangée de cet anneau.

Chaque fente a une forme générale allongée s'étendant sensiblement en direction circonférentielle. Chaque fente a une étendue angulaire comprise entre 2 et 10°. Chaque anneau a un nombre de fentes inférieur à 50. L'étendue circonférentielle cumulée des fentes de chaque anneau est comprise entre 160 et 180°.

Les rangées de fentes d'un anneau sont situées dans deux plans parallèles entre eux et sensiblement perpendiculaires à l'axe de révolution des anneaux, qui est l'axe longitudinal de la turbomachine. Les rangées de fentes de l'autre anneau sont situées respectivement dans ces plans. Dans chaque rangée, deux fentes adjacentes sont séparées l'une de l'autre par une partie pleine.

L'anneau externe est déplaçable sur l'anneau interne depuis une position de fermeture dans laquelle ses fentes sont alignées en direction radiale avec des parties pleines de l'anneau interne, jusqu'à position d'ouverture dans laquelle les fentes des anneaux sont alignées en direction radiale. Le déplacement de l'anneau externe 56 entre ces positions peut être réalisé sur un angle de l'ordre de 5°.

Les anneaux 54, 56 peuvent avoir notamment une forme générale cylindrique ou bien tronconique voire toute autre forme permettant une rotation d'un anneau sur l'autre.

Bien que cela ne soit pas représenté, les anneaux peuvent être équipés de moyens de butée ou d'appui pour que les anneaux coopèrent entre eux et définissent précisément les positions d'ouverture et de fermeture précitées. Les anneaux peuvent en outre être équipés de moyens d'étanchéité.

On peut envisager plusieurs configurations pour le conduit 48 :
- un conduit annulaire reliant toutes les fentes aux grilles d'échappement dans la veine secondaire (dont le nombre et la position peuvent être variables)
- un conduit par fente ;
- un mixte des deux configurations précédentes ; un conduit pour plusieurs fentes.

L'invention peut permettre de :
- diminuer les pertes aérodynamiques en position de fermeture (la zone morte précitée est supprimée ou limitée au maximum),
- diminuer la masse du système de décharge par rapport à ceux de la technique antérieure, et
- accroître la robustesse de commande (système d'actionnement simplifié au maximum) : à minima, un seul actionneur peut être nécessaire pour ouvrir ou fermer le système.

## Revendications

1. Turbomachine (30) à double flux, comprenant une première veine annulaire (36) d'écoulement d'un flux primaire (I) et une deuxième veine annulaire (42) coaxiale d'écoulement d'un flux secondaire (II) s'étendant autour de cette première veine, la turbomachine comprenant en outre un système (46) de décharge de gaz du flux primaire vers le flux secondaire, ledit système comprenant au moins un conduit de décharge (48) dont une extrémité interne débouche sur un carter externe (50) de la première veine et dont une extrémité externe débouche sur un carter interne (44) de la seconde veine, ledit système comprenant en outre au moins un actionneur (52) de déplacement d'au moins un élément mobile entre une première position de fermeture du conduit et une seconde position de décharge et d'ouverture du conduit,
**caractérisée en ce que** le système comprend deux anneaux (54, 56) coaxiaux s'étendant l'un autour de l'autre, un premier anneau interne (54) perforé situé au niveau dudit carter externe et s'étendant sensiblement dans le prolongement de ce carter externe, et un second anneau externe (56) perforé monté en coulissement circonférentiel sur le premier anneau, entre ladite première position dans laquelle les perforations (54a, 56a) des anneaux ne communiquent pas entre elles, et ladite seconde position dans laquelle les perforations des anneaux communiquent entre elles, ledit actionneur étant situé entre lesdites carters interne et externe en dehors de la veine de décharge (D) définie par ledit conduit.

2. Turbomachine (30) selon la revendication précédente, dans laquelle l'anneau interne (54) est fixe par rapport audit carter externe (50).

3. Turbomachine (30) selon l'une des revendications précédentes, dans laquelle les anneaux interne (54) et externe (56) ont une même dimension axiale.

4. Turbomachine (30) selon l'une des revendications précédentes, dans laquelle les perforations (54a, 56a) desdits anneaux interne (54) et externe (56) ont des formes et dimensions sensiblement identiques.

5. Turbomachine (30) selon l'une des revendications précédentes, dans laquelle les anneaux interne (54) et externe (56) comportent chacun une ou deux rangées annulaires de fentes par exemple régulièrement réparties en direction circonférentielle.

6. Turbomachine (30) selon la revendication précédente, dans laquelle les anneaux interne (54) et externe (56) comportent chacun une seule rangée annulaire de fentes, les fentes des anneaux étant situées dans un même plan sensiblement perpendiculaire à l'axe de révolution des anneaux.

7. Turbomachine (30) selon la revendication 5, dans laquelle les anneaux interne (54) et externe (56) comportent chacun au moins deux rangées annulaires de fentes, les fentes d'une des rangées de chaque anneau étant disposées en quinconce par rapport aux fentes de l'autre des rangées de cet anneau.

8. Turbomachine (30) selon la revendication précédente, dans laquelle l'étendue circonférentielle cumulée des fentes de la rangée ou de chacune des rangées de chaque anneau est comprise entre 160 et 180°.

9. Turbomachine (30) selon l'une des revendications 5 à 8, dans laquelle les fentes ont chacune une forme générale allongée s'étendant sensiblement en direction circonférentielle.

10. Turbomachine (30) selon l'une des revendications 5 à 9, dans laquelle les anneaux interne (54) et externe (56) comportent chacun un nombre de fentes inférieur à 50, et par exemple compris entre 5 et 20.

## Patentansprüche

1. Doppelstrom-Turbomaschine (30), umfassend einen ersten ringförmigen Strom (36) für die Strömung eines Primärflusses (I) und einen zweiten koaxialen ringförmigen Strom (42) für die Strömung eines Sekundärflusses (II), der sich um diesen ersten Strom herum erstreckt, wobei die Turbomaschine weiter ein Gasabzugssystem (46) vom Primärfluss zum Sekundärfluss umfasst, wobei das System mindestens eine Abzugsleitung (48) umfasst, von der ein Innenende in ein äußeres Gehäuse (50) des ersten Stroms mündet und von der ein Außenende in ein inneres Gehäuse (44) des zweiten Stroms mündet, wobei das System weiter mindestens einen Aktuator (52) zum Verlagern mindestens eines beweglichen Elements zwischen einer ersten Schließposition der Leitung und einer zweiten Abzugs- und Öffnungsposition der Leitung umfasst,
**dadurch gekennzeichnet, dass** das System zwei koaxiale Ringe (54, 56) umfasst, die sich umeinander erstrecken, einen ersten perforierten Innenring (54), der sich im Bereich des äußeren Gehäuses befindet und sich im Wesentlichen in der Verlängerung dieses äußeren Gehäuses erstreckt, und einen zweiten perforierten Außenring (56), der auf dem ersten Ring umfangsmäßig gleitend montiert ist, zwischen der ersten Position, in der die Perforationen (54a, 56a) der Ringe nicht miteinander in Verbindung stehen, und der zweiten Position, in der die Perforationen der Ringe miteinander in Verbindung stehen, wobei sich der Aktuator zwischen dem inneren und äußeren Gehäuse außerhalb des durch die Leitung definierten Abzugsstroms (D) befindet.

2. Turbomaschine (30) nach dem vorstehenden Anspruch, wobei der Innenring (54) im Verhältnis zum äußeren Gehäuse (50) feststehend ist.

3. Turbomaschine (30) nach einem der vorstehenden Ansprüche, wobei der Innenring (54) und der Außenring (56) eine gleiche Axialdimension aufweisen.

4. Turbomaschine (30) nach einem der vorstehenden Ansprüche, wobei die Perforationen (54a, 56a) des Innenrings (54) und des Außenrings (56) im Wesentlichen identische Formen und Dimensionen aufweisen.

5. Turbomaschine (30) nach einem der vorstehenden Ansprüche, wobei der Innenring (54) und der Außenring (56) jeweils eine oder zwei ringförmige Schlitzreihen umfassen, die beispielsweise in Umfangsrichtung gleichmäßig verteilt sind.

6. Turbomaschine (30) nach dem vorstehenden Anspruch, wobei der Innenring (54) und der Außenring (56) jeweils eine einzige ringförmige Schlitzreihe umfassen, wobei sich die Schlitze der Ringe in einer selben Ebene befinden, die zur Rotationsachse der Ringe im Wesentlichen rechtwinklig ist.

7. Turbomaschine (30) nach Anspruch 5, wobei der Innenring (54) und der Außenring (56) jeweils mindestens zwei ringförmige Schlitzreihen umfassen, wobei die Schlitze einer der Reihen jedes Rings im Verhältnis zu den Schlitzen der anderen der Reihen dieses Rings versetzt angeordnet sind.

8. Turbomaschine (30) nach dem vorstehenden Anspruch, wobei die kumulierte Umfangserstreckung der Schlitze der Reihe oder jeder der Reihen jedes Rings zwischen 160 und 180° beträgt.

9. Turbomaschine (30) nach einem der Ansprüche 5 bis 8, wobei die Schlitze jeweils eine allgemein längliche Form aufweisen, die sich im Wesentlichen in Umfangsrichtung erstreckt.

10. Turbomaschine (30) nach einem der Ansprüche 5 bis 9, wobei der Innenring (54) und der Außenring (56) jeweils eine Schlitzanzahl von weniger als 50 und beispielsweise zwischen 5 und 20 umfassen.

## Claims

1. Bypass turbine engine (30), comprising a first annular flow duct (36) of a primary stream (I) and a second coaxial annular flow duct (42) of a secondary stream (II) extending around this first duct, the turbine engine further comprising a system (46) for bleeding gas from the primary stream to the secondary stream, said system comprising at least one bleed duct (48) of which one internal end opens onto an outer casing (50) of the first duct and of which one outer end opens onto an inner casing (44) of the second duct, said system further comprising at least one actuator (52) of the movement of at least one moveable element between a first closed position of the duct and a second bleed and open position of the duct,
**characterised in that** the system comprises two coaxial rings (54, 56) extending one around the other, a perforated internal first ring (54) situated at the level of said outer casing and extending substantially in the extension of this outer casing, and a perforated external second ring (56) mounted such that it slides circumferentially on the first ring, between said first position in which the perforations (54a, 56a) of the rings do not communicate with one another, and said second position in which the perforations of the rings communicate with one another, said actuator being located between said inner and outer casings outside of the bleed duct (D) defined by said duct.

2. Turbine engine (30) according to the preceding claim, in which the internal ring (54) is fixed with respect to said outer casing (50).

3. Turbine engine (30) according to one of the preceding claims, in which the internal (54) and external (56) rings have the same axial dimension.

4. Turbine engine (30) according to one of the preceding claims, in which the perforations (54a, 56a) of said internal (54) and external (56) rings have substantially identical shapes and dimensions.

5. Turbine engine (30) according to one of the preceding claims, in which the internal (54) and external (56) rings each comprise one or two annular rows of slots, for example, regularly spaced in the circumferential direction.

6. Turbine engine (30) according to the preceding claim, in which the internal (54) and external (56) rings each comprise one single annular row of slots, the slots of the rings being situated in the same plane substantially perpendicular to the axis of revolution of the rings.

7. Turbine engine (30) according to claim 5, in which the internal (54) and external (56) rings each comprise at least two annular rows of slots, the slots of one of the rows of each ring being disposed in a staggered arrangement with respect to the slots of the other of the rows of this ring.

8. Turbine engine (30) according to the preceding claim, in which the cumulative circumferential extent of the slots of the row or of each one of the rows of each ring is between 160 and 180°.

9. Turbine engine (30) according to one of claims 5 to 8, in which the slots each have a general elongated shape extending substantially in the circumferential direction.

10. Turbine engine (30) according to one of claims 5 to 9, in which the internal (54) and external (56) rings each comprise a number of slots less than 50, and for example between 5 and 20.
